# EUROPEAN PATENT SPECIFICATION

(11) **EP 1 528 249 B1**
(45) Date of publication and mention of the grant of the patent: **09.03.2011**
(21) Application number: 04104986.7
(22) Date of filing: 12.10.2004
(51) Int. Cl.: F02M 25/07

(54) **Arrangement and method for controlling the recirculation of exhaust gases of a combustion engine**
Anordnung und Verfahren zur Steuerung der Rückführung des Abgases einer Brennkraftmaschine
Dispositif et procédé pour commander la recirculation des gaz d'échappement des moteurs à combustion interne

(30) Priority: 30.10.2003 SE 0302871
(43) Date of publication of application: 04.05.2005
(73) Proprietor: Scania CV AB, 151 87 Södertälje (SE)
(72) Inventor: Gustavsson, Anders, 151 39 Södertälje (SE)

(56) References cited:
- EP-A- 1 167 727
- EP-A- 1 270 921
- US-A- 6 085 732
- US-A1- 2003 192 516

## Description

### BACKGROUND TO THE INVENTION, AND STATE OF THE ART

The present invention relates to an arrangement and a method for controlling the recirculation of exhaust gases of a combustion engine according to the preambles of claims 1 and 6.

A known technique called EGR (Exhaust Gas Recirculation) is the leading back, via a return line, of part of the exhaust gases from a combustion process in a combustion engine to an inlet line for supply of air to the combustion engine. A mixture of air and exhaust gases is thus supplied via the inlet line to the engine's cylinders in which the combustion takes place. The return line for the exhaust gases comprises inter alia an EGR valve which can be set to a desired amount of EGR. An electrical control unit is adapted to controlling the EGR valve on the basis inter alia of information concerning the load of the combustion engine. The return line also comprises an EGR cooler adapted to cooling the exhaust gases in the return line before they are mixed with the air in the inlet line to the engine. Adding exhaust gases to the air causes a lower combustion temperature, resulting inter alia in a reduced content of nitrogen oxides NOₓ in the exhaust. This technique is used for both Otto engines and diesel engines.

Combustion engines for the powering of vehicles are usually equipped with a cooling system which has a circulating coolant. The coolant is circulated through specially designed passages in the combustion engine and absorbs heat generated by the combustion processes in the cylinders. The heat which the coolant absorbs as it passes through the combustion engine is given off in a radiator. The combustion engine can thus be caused to run at a substantially constant engine temperature which is optimum for operating the engine. The coolant of the ordinary cooling system is usually also used for the EGR cooler and thus for cooling the recirculating exhaust gases. Particular circumstances in which the ambient temperature in high and the combustion engine is heavily loaded, while at the same time cooling is required for the exhaust gases in the EGR cooler, subject the cooling system to a very heavy load. In such circumstances there is risk of the cooling system capacity being insufficient for maintaining a desired engine temperature. This means that the coolant temperature, like the engine temperature, may well rise and the engine may well reach a temperature above a certain level, with consequent risk of damage to the engine.

US 6 085 732 shows a system for diagnosing an EGR system used in connection with an internal combustion engine. The EGR system comprises an EGR valve and an EGR cooler, in which the recirculating exhaust gases are cooled by means of a coolant. The diagnosing system evaluates an outlet temperature of the recirculating exhaust gases from the EGR cooler or an outlet temperature of the coolant from the EGR cooler as a parameter for diagnosing the EGR system. This temperature is evaluated during a test phase, in which the EGR valve is initially closed, opened for a predetermined duration, and then closed.

### SUMMARY OF THE INVENTION

The object of the present invention is to provide an arrangement and a method of the kind mentioned in the introduction whereby there is assurance that the temperature of the combustion engine will not rise to a level at which engine damage might occur, even in cases where the engine is under heavy load and the ambient temperature is high.

This object is achieved with the arrangement of the kind mentioned in the introduction which is characterised by the features indicated in the characterising part of claim 1. The sensor is positioned so that it measures the temperature at a point where the resulting temperature values vary with the engine temperature. The sensor may be applied to a surface of the engine block or at another suitable point resulting in reliable temperature values on the basis of which the engine temperature can be determined with good accuracy. When at least one such temperature value indicating that the engine temperature is above a maximum acceptable value is received, the valve closes and the recirculation of exhaust gases ceases. Cooling the recirculating exhaust gases represents a relatively large load on the cooling system. Cessation of the recirculation of exhaust gases releases a corresponding cooling capacity of the cooling system, leading to a lower temperature of the cooling medium in the cooling system. The cooling medium then being led to the combustion engine thus provides better cooling of the combustion engine. This means that the temperature of the combustion engine can be lowered relatively quickly to an acceptable level. There is thus substantially always assurance that the temperature of the combustion engine will not rise to a level at which engine damage might occur, even when the engine is under heavy load and the ambient temperature is high. However, the predetermined temperature at which the recirculation of exhaust gases ceases may, if so desired, be predetermined at a lower temperature than that corresponding to a maximum acceptable engine temperature. Such may be the case where a cooling system is used in which the coolant has a lower boiling point than the maximum acceptable engine temperature. In such cases the arrangement may be used for preventing the coolant boiling.

According to a preferred embodiment of the present invention the location of the sensor is such that it detects the temperature of the cooling medium. Placing the sensor at a suitable point in the cooling system means that the control unit substantially continuously receives information about the temperature of the coolant at that point in the cooling system. Coolant temperature is a parameter which varies with the temperature of the combustion engine. Thus a predetermined temperature of the cooling medium may indicate that the combustion engine has reached a maximum acceptable temperature. With advantage, the sensor is positioned in the cooling system adjacent to an outlet line for the cooling medium from the combustion engine so that the sensor detects the temperature of the cooling medium substantially immediately after it leaves the combustion engine. In such cases the temperature of the cooling medium is substantially the same as the engine temperature, resulting in reliable temperature values substantially corresponding to the temperature of the combustion engine. Said maximum acceptable engine temperature usually prevails when the cooling medium temperature is within the range 100 - 110°C. The maximum acceptable engine temperature may of course vary across different types of combustion engines.
According to the present invention, the control unit is adapted, after a closure caused by the maximum acceptable engine temperature having been reached, to reopening the valve and restarting the recirculation of exhaust gases when the detected temperature values received indicate that the temperature has dropped to a predetermined acceptable level. Such an acceptable level should be at least two or more degrees lower than the maximum acceptable temperature. The recirculation of exhaust gases will thus resume automatically after a break caused by excessive engine temperature.

The object stated above is also achieved with the method of the kind mentioned in the introduction which is characterised by the features indicated in the characterising part of claim 6. When the recirculation of exhaust gases ceases, the cooling system need no longer cool any exhaust gases in the EGR cooler. This means that the whole cooling capacity of the cooling system can if necessary be used for cooling the combustion engine. Applying such an increased cooling power will substantially always prevent the temperature of the combustion engine from reaching an unacceptably high level, thus effectively preventing the occurrence of engine damage caused by excessive engine temperature.

### BRIEF DESCRIPTION OF THE DRAWINGS

A preferred embodiment of the invention is described below by way of example with reference to the attached drawings, in which:
- Fig. 1: depicts schematically a combustion engine with an EGR system, a cooling system and an arrangement according to the present invention,
- Fig. 2: depicts a flowchart of a method according to the present invention.

### DETAILED DESCRIPTION OF A PREFERRED EMBODIMENT OF THE INVENTION

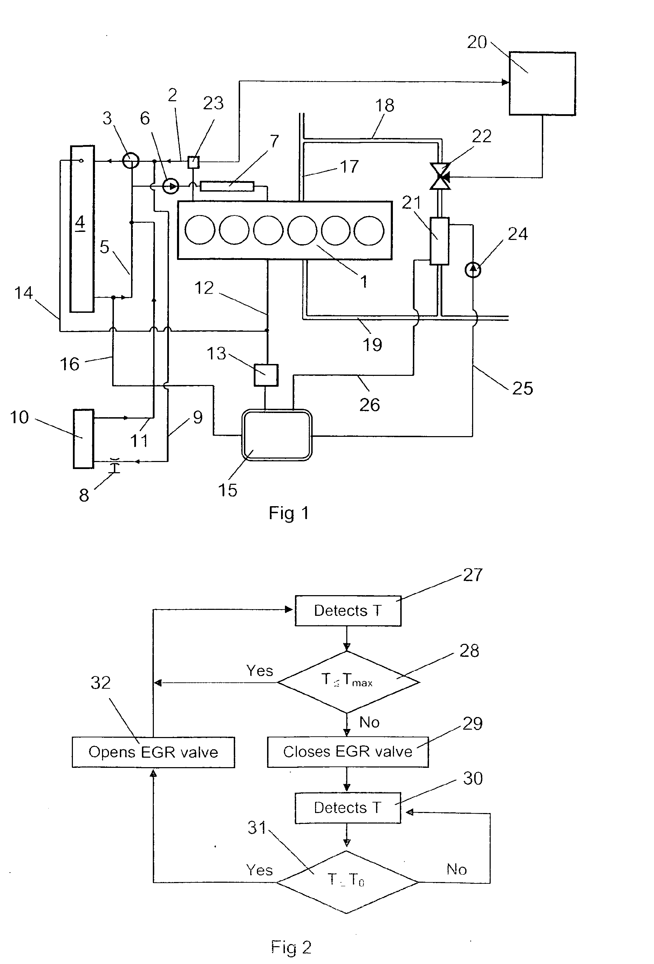

Fig. 1 depicts a combustion engine 1, which may be a diesel engine or an Otto engine. The combustion engine 1 may be intended to power a heavy vehicle. The combustion engine 1 is provided with a cooling system with a circulating coolant for cooling the combustion engine 1 and ensuring that the combustion engine 1 maintains a substantially constant optimum engine temperature during operation. After it has cooled the combustion engine 1, the circulating coolant is led out via an outlet line 2 towards a thermostat 3. If the temperature of the coolant exceeds a set temperature of the thermostat 3, the coolant is led through the thermostat 3 to the radiator 4 for cooling. After passing through the radiator 4, the coolant is led through a line 5 to a coolant pump 6 for return to the combustion engine 1 via an oil cooler 7. If the temperature of the coolant does not exceed the set temperature of the thermostat 3, the coolant is led via the thermostat 3 and a bypass line back to the engine 1 via the pump 6. A control valve 8 can be operated to cause part of the heat the coolant from the engine 1 to be used for heating purposes. When the control valve 8 is open, hot coolant is led via a line 9 to a heat exchanger 10 to provide heating, e.g. for a driver's space in the vehicle. After passing through the heat exchanger 10, the coolant is led via a line 11 and the coolant pump 6 back to the engine 1. A first venting line 12 for the coolant extends from the engine 1 to a venting device 13. A second venting line 14 for the coolant extends from the radiator 4, via the first venting line 12, to the venting device 13. The venting device 13 is adapted to separating from the coolant any air present in the cooling system. When the coolant has been vented, it is led to an expansion vessel 15 for storage. Coolant from the expansion vessel 15 is drawn by the pump 6 via lines 16, 5 to the engine 1.

Fig. 1 also depicts an EGR system for recirculating part of the exhaust gases from the combustion engine 1. Exhaust gases from the cylinders of the combustion engine 1 are led from the respective cylinders to a common exhaust line 17. Part of the exhaust gases in the exhaust line 17 is led via a return line 18 to an inlet line 19 which leads air to the cylinders of the combustion engine 1. The recirculating portion of the exhaust gases is intended to be mixed with the air in the inlet line 19. The return line 18 comprises an EGR cooler 21 for cooling the exhaust gases in the return line 18. The return line 18 also comprises an EGR valve 22 by which the exhaust gas flow in the return line 18 can be regulated. An electrical control unit 20 is adapted to regulating the EGR valve 22. The control unit 20 may form part of an electrical engine control unit of the vehicle. The control unit 20 may use information about, for example, the fuel supply to the engine 1 and stored information concerning the specific combustion engine to determine the engine load and regulate the EGR valve 22. During operation of the engine 1 at substantially constant load, the control unit 20 is adapted to keeping the EGR valve 22 in an open position. A pump 24 is intended to transfer coolant from the expansion vessel 15 to the EGR cooler 21 via a line 25. When the coolant has passed through the EGR cooler 21, it is led back to the expansion vessel 15 via a line 26.

A sensor 23 is applied in the coolant outlet line 2 from the combustion engine 1. The sensor 23 detects the temperature T of the coolant leaving the combustion engine 1. The coolant temperature T may thus be regarded as substantially the same as the temperature of the combustion engine. The sensor 23 substantially continuously sends signals concerning the measured temperature values T to the control unit 20. During operation of the combustion engine 1, the control unit 20 regulates the EGR valve 22 according to the engine load so that a suitable amount of exhaust gases is led through the return line 18. These exhaust gases are cooled by the EGR cooler 21 before they enter the air line 19. Mixing exhaust gases with the air lowers the combustion temperature in the combustion engine 1 and hence also the content of nitrogen oxides (NOₓ) formed during the combustion processes. In normal circumstances the cooling system's capacity is such as to cool the combustion engine 1 so that it maintains a substantially constant working temperature during operation while at the same time the coolant in the cooling system can also be used for cooling the exhaust gases passing through the EGR cooler 21.

The capacity of the radiator 4 for cooling the circulating coolant depends on the temperature of the air flowing through the radiator 4. High air temperature reduces the capacity of the radiator. Nor is the heat exchanger 10 used for heating purposes when the ambient air temperature is high. In this situation the coolant thus does not give off any heat via the heat exchanger 10. If in addition the combustion engine 1 is under heavy load for a lengthy period there is obvious risk of the cooling system not having sufficient capacity for cooling both the combustion engine 1 and the recirculating exhaust gases. In such circumstances the temperature of the coolant in the cooling system rises, and hence also the temperature of the combustion engine. If the engine temperature rises above a certain level there is risk of damage to the engine.

Fig. 2 depicts a flowchart of a method according to the invention. At 27, the sensor 23 detects the coolant temperature T and sends the control unit 20 information concerning measured temperature values T in the outlet line 2. As the sensor 23 detects the temperature of the coolant leaving the combustion engine 1, the coolant temperature substantially corresponds to that of the combustion engine 1. At 28, the control unit 20 does a comparison to see whether the temperature T of the coolant in the outlet line 2 is lower than or equal to a maximum acceptable coolant temperature Tₘₐₓ which corresponds to a maximum acceptable engine temperature. If the coolant temperature T is lower than or equal to the maximum acceptable coolant temperature Tₘₐₓ, the process starts again at 27. In this situation the control unit 20 controls the EGR valve 22 in a conventional manner according to the engine's load. If on the other hand the coolant temperature T is higher than the maximum acceptable coolant temperature Tₘₐₓ, this means that the engine has reached an excessive temperature. However, the maximum acceptable coolant temperature Tₘₐₓ is set with a certain safety margin so that it can at least for a short time be exceeded without risk of damage to the engine. At 29, to lower the temperature T, the control unit 20 therefore closes the EGR valve 22 so that the recirculating exhaust gas flow ceases. As no coolant then needs cooling, the coolant temperature in the expansion vessel 15 drops, resulting in a lower temperature for the coolant being led from the expansion vessel 15 to the combustion engine 1. The coolant thus provides more effective cooling of the combustion engine, resulting in a lower engine temperature. The temperature of the combustion engine is thus prevented from reaching a level at which damage to the engine might occur, even in cases where the engine is under heavy load and the ambient temperature is high.

At 30, the sensor 23 detects new temperature values T of the coolant leaving the combustion engine 1. The control unit 20 receives the new temperature values from the sensor 23, and at 31 it does a comparison to see whether the coolant temperature has dropping to an operationally acceptable temperature level To. So long as the coolant temperature has not dropping to the acceptable temperature level To, the control unit 20 will keep the EGR valve closed. When the control unit 20 receives temperature values lower than or equal to the acceptable temperature level To, it reopens at 32 the EGR valve. Thereafter the process starts again at 27.

The invention is in no way limited to the embodiment described in the drawings but may be varied freely within the scopes of the claims.

## Claims

1. An arrangement for controlling the recirculation of exhaust gases of a combustion engine (1), the arrangement comprises a combustion engine (1), an EGR system and a cooling system, whereby the combustion engine (1) is connected to the EGR system which comprises a return line (18) for recirculation of exhaust gases from the combustion engine (1) to an inlet line (19) which supplies air to the combustion engine (1), a valve (22) adapted to regulating the amount of exhaust gases being recirculated and a cooler (21) adapted to cooling the exhaust gases in the return line (18), and whereby the combustion engine (1) is also connected to the cooling system containing a circulating cooling medium adapted to cooling the combustion engine (1) and to cooling the exhaust gases in the return line (18) by means of said cooler (21),
**characterised in that** the arrangement comprises a sensor (23) so positioned as to detect a temperature (T) which is related to the temperature of the combustion engine so that it measures the temperature at a point where the resulting temperature values vary with the temperature of the combustion engine, and a control unit (20) adapted to receiving signals from the sensor (23) concerning detected temperature values (T) and to closing the valve (22) so that the recirculation of exhaust gases ceases when at least one temperature value (T) exceeding a predetermined temperature (Tₘₐₓ) has been received from sensor (23) and wherein the control unit (20) is adapted, after closure of the valve (22) caused by the maximum acceptable temperature (Tₘₐₓ) having been exceeded, to reopening the valve (22) and restarting the recirculation of exhaust gases when at least one temperature value (T) which indicates that the temperature has dropped to a predetermined temperature (T₀) has been received.

2. An arrangement according to claim 1, **characterised in that** said predetermined temperature (Tₘₐₓ) corresponds to a maximum acceptable engine temperature.

3. An arrangement according to claim 1 or 2, **characterised in that** the location of the sensor (23) in the cooling system is such that it detects the temperature (T) of the cooling medium.

4. An arrangement according to claim 2, **characterised in that** the location of the sensor (23) in the cooling system is adjacent to an outlet line (2) for the cooling medium from the combustion engine (1) so that the sensor (23) detects the temperature (T) of the cooling medium substantially immediately after the latter leaves the combustion engine (1).

5. An arrangement according to any one of the foregoing claims, **characterised in that** said predetermined temperature (Tₘₐₓ₎ is within the range 100 - 110 °C.

6. A method for controlling the recirculation of exhaust gases of a combustion engine (1), whereby the combustion engine (1) is connected to the EGR system which comprises a return line (18) for recirculation of exhaust gases from the combustion engine (1) to an inlet line (19) which supplies air to the combustion engine (1), a valve (22) adapted to regulating the amount of exhaust gases being recirculated and a cooler (21) adapted to cooling the exhaust gases in the return line (18), and whereby the combustion engine (1) is also connected to a cooling system containing a circulating cooling medium adapted to cooling the combustion engine (1) and to cooling the exhaust gases in the return line (18) by means of said cooler (21), **characterised by** the steps of detecting a temperature (T) which is related to the temperature of the combustion engine at a point where the resulting temperature values vary with the temperature of the combustion engine and of closing the valve (22) so that the recirculation of exhaust gases ceases when at least one temperature value (T) exceeding a predetermined temperature (Tₘₐₓ) has been received from sensor (23) and of reopening the valve (22) and restarting the recirculation of exhaust gases, after closure of the valve (22) caused by the maximum acceptable temperature (Tₘₐₓ) having been exceeded, when at least one temperature value (T) which indicates that the temperature has dropped to a predetermined level (T₀) has been received.

7. A method according to claim 6, **characterised by** the step of closing the valve (22) when a temperature value (T) exceeding a predetermined temperature (Tₘₐₓ) which corresponds to a maximum acceptable engine temperature has been received.

8. A method according to claim 6 or 7, **characterised by** the step of detecting the temperature (T) of the cooling medium.

9. A method according to claim 8, **characterised by** the step of detecting the temperature (T) of the cooling medium substantially immediately after the latter leaves the combustion engine (2).

10. A method according to any one of claims 6 - 9 above, **characterised by** closing the valve (22) when a temperature value (T) exceeding a predetermined temperature (Tₘₐₓ) within the temperature range 100 - 110 °C has been received.

## Patentansprüche

1. Anordnung zum Steuern der Rückführung von Abgasen eines Verbrennungs-motors (1), wobei die Anordnung einen Verbrennungsmotor (1), ein EGR-System (Exhaust Gas Recirculation System; Abgasrückführsystem) und ein Kühlsystem umfasst, wobei der Verbrennungsmotor (1) mit dem EGR-System gekoppelt ist, das eine Rückführleitung (18) zum Rückführen von Abgasen von dem Verbrennungsmotor (1) zu einer Einlassleitung (19) umfasst, die dem Verbrennungsmotor (1) Luft zuführt, ein Ventil (22), das zum Regeln der Menge an rückgeführten Abgasen ausgeführt ist und einen Kühler (21), der zum Kühlen der Abgase in der Rückführleitung (18) ausgelegt ist, und wobei der Verbrennungsmotor (1) ferner mit dem Kühlsystem verbunden ist, das ein zirkulierendes Kühlmedium umfasst, das dazu vorgesehen ist, um den Verbrennungsmotor (1) zu kühlen und um die Abgase in der Rückführleitung (18) mittels des Kühlers (21) zu kühlen,
**dadurch gekennzeichnet, dass** die Anordnung einen Sensor (23) umfasst, der derart angeordnet ist, dass er eine Temperatur (T) erfasst, die zu der Temperatur des Verbrennungsmotors in Relation steht, so dass er die Temperatur an einem Punkt misst, an dem die resultierenden Temperaturwerte mit der Temperatur des Verbrennungsmotors schwanken, und eine Steuereinheit (20), die dazu ausgelegt ist, um Signale vom Sensor (23) bezüglich der erfassten Temperaturwerte (T) zu empfangen, und um das Ventil (22) zu schließen, so dass die Rückführung von Abgasen unterbrochen wird, wenn wenigstens ein Temperaturwert (T), der eine vorbestimmte Temperatur (Tₘₐₓ) übersteigt, vom Sensor (23) aufgenommen wurde, und wobei die Steuereinheit (20) dazu ausgelegt ist, nach dem Schließen des Ventils (22), bewirkt durch ein Übersteigen der maximal annehmbaren Temperatur (Tₘₐₓ), das Ventil (22) erneut zu öffnen und die Rückführung von Abgasen erneut zu starten, wenn wenigstens ein Temperaturwert aufgenommen wurde, der anzeigt, dass die Temperatur auf eine vorbestimmte Temperatur (T₀) abgefallen ist.

2. Anordnung nach Anspruch 1,
**dadurch gekennzeichnet, dass** die vorbestimmte Temperatur (Tₘₐₓ) einer maximal annehmbaren Motortemperatur entspricht.

3. Anordnung nach Anspruch 1 oder 2,
**dadurch gekennzeichnet, dass** der Ort des Sensors (23) im Kühlsystem derart gewählt ist, dass er die Temperatur (T) des Kühlmediums erfasst.

4. Anordnung nach Anspruch 2,
**dadurch gekennzeichnet, dass** der Ort des Sensors (23) im Kühlsystem benachbart einer Auslassleitung (2) für das Kühlmedium von dem Verbrennungsmotor (1) ist, so dass der Sensor (23) die Temperatur (T) des Kühlmediums im Wesentlichen unmittelbar erfasst, nachdem letzteres den Verbrennungsmotor (1) verlassen hat.

5. Anordnung nach einem der vorangehenden Ansprüche,
**dadurch gekennzeichnet, dass** die vorbestimmte Temperatur (Tₘₐₓ) in einem Bereich von 100 bis 110°C liegt.

6. Verfahren zum Steuern der Rückführung von Abgasen eines Verbrennungsmotors (1), wobei der Verbrennungsmotor (1) mit dem EGR-System (Exhaust Gas Recirculation System; Abgasrückführungssystem) gekoppelt ist, das eine Rückführleitung (18) zum Rückführen von Abgasen aus dem Verbrennungsmotor (1) zu einer Einlassleitung (19) umfasst, die dem Verbrennungsmotor (1) Luft zuführt, ein Ventil (22), das zum Regeln der Menge an zurückgeführten Abgasen ausgelegt ist, und einen Kühler (21), der zum Kühlen der Abgase der Rückführleitung (18) ausgelegt ist, und wobei der Verbrennungsmotor (1) ferner mit einem Kühlsystem gekoppelt ist, das ein zirkulierendes Kühlmedium aufweist, das zum Kühlen des Verbrennungsmotors (1) ausgelegt ist, und das zum Kühlen der Abgase in der Rückführleitung (18) mittels des Kühlers (21) ausgelegt ist,
**gekennzeichnet durch** die Schritte
Erfassen einer Temperatur (T), die zu der Temperatur des Verbrennungsmotors in Relation steht, an einem Punkt, an dem die resultierenden Temperaturwerte mit der Temperatur des Verbrennungsmotors schwanken, und
Schließen des Ventils (22), so dass die Rückführung von Abgasen unterbrochen wird, wenn wenigstens ein Temperaturwert (T), der eine vorbestimmte Temperatur (Tₘₐₓ) übersteigt, von dem Sensor empfangen wurde und
erneutes Öffnen des Ventils (22) und erneutes Starten der Rückführung von Abgasen nach dem Schließen des Ventils (22), das **durch** ein Überschreiten der maximal annehmbaren Temperatur (Tₘₐₓ) verursacht wurde, wenn wenigstens ein Temperaturwert (T) erhalten wurde, der angibt, dass die Temperatur auf einen vorbestimmten Wert (Tₒ) abgefallen ist.

7. Verfahren nach Anspruch 6,
**gekennzeichnet durch** den Schritt des Schließens des Ventils (22), wenn ein Temperaturwert (T) erhalten wurde, der eine vorbestimmte Temperatur (Tₘₐₓ) übersteigt, die einer maximal annehmbaren Motortemperatur entspricht.

8. Verfahren nach Anspruch 6 oder 7,
**gekennzeichnet durch** den Schritt des Erfassens der Temperatur (T) des Kühlmediums.

9. Verfahren nach Anspruch 8,
**gekennzeichnet durch** den Schritt des Erfassens der Temperatur (T) des Kühlmediums im Wesentlichen unmittelbar nachdem letzteres den Verbrennungsmotor (2) verlässt.

10. Verfahren nach einem der Ansprüche 6 bis 9,
**gekennzeichnet durch** das Schließen des Ventils (22), wenn ein Temperaturwert (T) erhalten wurde, der eine vorbestimmte Temperatur (Tₘₐₓ) übersteigt, der innerhalb des Temperaturbereichs 100 bis 110°C liegt.

## Revendications

1. Agencement pour commander le recyclage des gaz d'échappement d'un moteur à combustion interne (1), l'agencement comprenant un moteur à combustion interne (1) un circuit de recyclage des gaz d'échappement (EGR) et un circuit de refroidissement, dans lequel agencement le moteur à combustion interne (1) est raccordé au circuit EGR, lequel comprend une conduite de retour (18) servant pour le recyclage des gaz d'échappement du moteur à combustion interne (1) vers une conduite d'entrée (19) qui fournit de l'air au moteur à combustion interne (1), une soupape (22) appropriée pour régler la quantité de gaz d'échappement qui est recyclée et un refroidisseur (21) approprié pour refroidir les gaz d'échappement présents dans la conduite de retour (18), et dans lequel le moteur à combustion interne (1) est aussi raccordé au circuit de refroidissement qui contient un milieu de refroidissement circulant approprié pour refroidir le moteur à combustion interne (1) et pour refroidir les gaz d'échappement présents dans la conduite de retour (18) au moyen dudit refroidisseur (21), **caractérisé en ce que** l'agencement comprend un capteur (23) positionné de manière à détecter une température (T) qui est liée à la température du moteur à combustion interne, par le fait qu'il mesure la température à un point où les valeurs de température résultantes varient avec la température du moteur à combustion interne, et une unité de commande (20) appropriée pour recevoir des signaux du capteur (23) qui concernent des valeurs de température (T) détectées et pour fermer la soupape (22) de manière que le recyclage des gaz d'échappement cesse lorsqu'au moins une valeur de température (T) excédant une température prédéterminée (Tₘₐₓ) a été reçue du capteur (23), l'unité de commande (20) étant appropriée pour ouvrir de nouveau la soupape (22), après la fermeture de la soupape (22) provoquée par le fait que la température maximum admissible (Tₘₐₓ) a été dépassée, et pour remettre le recyclage des gaz d'échappement en marche lorsqu'au moins une valeur de température (T) qui indique que la température est tombée à une température prédéterminée (Tₒ) a été reçue.

2. Agencement selon la revendication 1, **caractérisé en ce que** ladite température prédéterminée (Tₘₐₓ) correspond à une température maximum admissible du moteur.

3. Agencement selon la revendication 1 ou 2, **caractérisé en ce que** la localisation du capteur (23) dans le circuit de refroidissement est telle que ce capteur détecte la température (T) du milieu de refroidissement.

4. Agencement selon la revendication 2, **caractérisé en ce** la localisation du capteur (23) dans le circuit de refroidissement est adjacente à une conduite de sortie (2) du milieu de refroidissement sortant du moteur à combustion interne (1), de sorte que le capteur (23) détecte la température (T) du milieu de refroidissement sensiblement aussitôt après que ce dernier a quitté le moteur à combustion interne (1).

5. Agencement selon une quelconque des revendications précédentes, **caractérisé en ce que** ladite température prédéterminée (Tₘₐₓ) est comprise dans l'intervalle de 100 à 110 °C.

6. Procédé pour commander le recyclage des gaz d'échappement d'un moteur à combustion interne (1), dans lequel le moteur à combustion interne (1) est raccordé au circuit de recyclage des gaz d'échappement (EGR), lequel comprend une conduite de retour (18) servant pour le recyclage des gaz d'échappement du moteur à combustion interne (1) vers une conduite d'entrée (19) qui fournit de l'air au moteur à combustion interne (1), une soupape (22) appropriée pour régler la quantité de gaz d'échappement qui est recyclée et un refroidisseur (21) approprié pour refroidir les gaz d'échappement présents dans la conduite de retour (18), et dans lequel le moteur à combustion interne (1) est aussi raccordé à un circuit de refroidissement qui contient un milieu de refroidissement circulant approprié pour refroidir le moteur à combustion interne (1) et pour refroidir les gaz d'échappement présents dans la conduite de retour (18) au moyen dudit refroidisseur (21), **caractérisé par** les étapes consistant à détecter une température (T) qui est liée à la température du moteur à combustion interne à un point où les valeurs de température résultantes varient avec la température du moteur à combustion interne, et à fermer la soupape (22) de manière que le recyclage des gaz d'échappement cesse lorsqu'au moins une valeur de température (T) excédant une température prédéterminée (Tₘₐₓ) a été reçue d'un capteur (23) et à ouvrir de nouveau la soupape (22) et remettre en marche le recyclage des gaz d'échappement après la fermeture de la soupape (22) provoquée par le fait que la température maximum admissible (Tₘₐₓ) a été dépassée lorsqu'au moins une valeur de température (T) qui indique que la température est tombée à un niveau prédéterminé (T₀) a été reçue.

7. Procédé selon la revendication 6, **caractérisé par** l'étape consistant à fermer la soupape (22) lorsqu'une valeur de température (T) excédant une température prédéterminée (Tₘₐₓ) qui correspond à une température maximum admissible du moteur a été reçue.

8. Procédé selon la revendication 6 ou 7, **caractérisé par** l'étape consistant à détecter la température (7) du milieu de refroidissement.

9. Procédé selon la revendication 8, **caractérisé par** l'étape consistant à détecter la température du milieu de refroidissement immédiatement après que ce dernier a quitté le moteur à combustion interne (2).

10. Procédé selon une quelconque des revendications 6 à 9 ci-dessus, **caractérisé en ce qu'**il ferme la soupape (22) lorsqu'une valeur de température (T) excédant une température prédéterminée (Tₘₐₓ) comprise dans l'intervalle de température de 100 à 110 °C a été reçue.
